# EUROPÄISCHE PATENTSCHRIFT

(11) **EP 1 618 167 B1**
(45) Veröffentlichungstag und Bekanntmachung des Hinweises auf die Patenterteilung: **10.09.2008**
(21) Anmeldenummer: 04722834.1
(22) Anmeldetag: 24.03.2004
(51) Int. Cl.: C09K 5/20, C23F 11/10, C23F 11/08

(54) **GEFRIERSCHUTZMITTELKONZENTRATE UND KÜHLMITTELZUSAMMENSETZUNGEN AUF BASIS VON POLYGLYKOLEN UND AMIDEN ZUM SCHUTZ VON MAGNESIUM UND DESSEN LEGIERUNGEN**
ANTIFREEZE CONCENTRATES AND COOLANT COMPOSITIONS BASED ON POLYGLYCOLS AND AMIDES FOR PROTECTING MAGNESIUM AND THE ALLOYS THEREOF
CONCENTRES D'ANTIGEL ET COMPOSITIONS REFRIGERANTES A BASE DE POLYGLYCOLS ET D'AMIDES POUR PROTEGER LE MAGNESIUM ET SES ALLIAGES

(30) Priorität: 25.03.2003 DE 10313280
(43) Veröffentlichungstag der Anmeldung: 25.01.2006
(73) Patentinhaber: BASF SE, 67056 Ludwigshafen (DE)
(72) Erfinder: WENDEROTH, Bernd, 69488 Birkenau (DE); DAMBACH, Stefan, 67454 Hassloch (DE); WEISS, Gerhard, 67063 Ludwigshafen (DE)
(74) Vertreter: Isenbruck, Günter
(86) Internationale Anmeldenummer: PCT/EP2004/003108
(87) Internationale Veröffentlichungsnummer: WO 2004/085566

(56) Entgegenhaltungen:
- EP-A- 0 048 429
- EP-A- 1 386 952
- WO-A-00/22189
- WO-A-02/08354
- DE-A- 3 701 719
- DE-A- 19 605 509
- US-A- 2 976 247
- US-A- 3 362 910

## Beschreibung

Die vorliegende Erfindung betrifft Gefrierschutzmittelkonzentrate auf Basis von Polyglykolen und Carbonsäureamiden und/oder Sulfonsäureamiden sowie aus den Konzentraten erhältliche gebrauchsfertige wässrige Kühlmittelzusammensetzungen. Gegenstand der Erfindung ist auch die Verwendung dieser Gefrierschutzmittelkonzentrate zur Herstellung von wässrigen Kühlmittelzusammensetzungen, die insbesondere für Magnesium und/oder Aluminium enthaltende Verbrennungsmotoren geeignet sind.

Gefrierschutzmittelkonzentrate für die Kühlkreisläufe von Verbrennungsmotoren, beispielsweise in Automobilen, enthalten meist Alkylenglykole, vor allem Ethylenglykol oder Propylenglykol, als Hauptkomponente. Zur Verwendung im Kühlsystem werden sie mit Wasser verdünnt und sollen neben Frostschutz auch für eine gute Wärmeabfuhr sorgen. Alkylenglykol/Wasser-Mischungen sind allerdings bei den Betriebstemperaturen von Verbrennungsmotoren sehr korrosiv. Deswegen müssen die verschiedenen Metalle und deren Legierungen, die im Kühlsystem vorkommen, ausreichend vor den verschiedensten Korrosionsarten, beispielsweise Lochfraßkorrosion, Spaltkorrosion, Erosion oder Kavitation, geschützt werden.

Nach dem Stand der Technik werden als Korrosionsinhibitoren in derartigen Kühlsystemen für die Vielfalt unterschiedlicher Metalle wie Stahl, Gusseisen, Kupfer, Messing, Aluminium und deren Legierungen sowie Lötmetalle, beispielsweise Lötzinn, eine Vielzahl chemischer Substanzen verwendet. Die erhaltenen Kühlerschutzmittel erfüllen bei Ihrer Verwendung zur Kühlung der heute überwiegend von der Kfz-Industrie eingesetzten Motoren aus Grauguss oder Gussaluminium-Legierungen die in sie gestellten Erwartungen bezüglich Korrosionsschutz.

Im Automobilbau wird derzeit versucht, durch Gewichtsreduzierung bei Kraftfahrzeugen den Treibstoffverbrauch abzusenken. So versucht man zum Beispiel, das Gewicht von Motoren dadurch zu verringern, dass man sie teilweise oder vollständig aus Magnesium oder Magnesiumlegierungen konstruiert.

Versuche haben jedoch gezeigt, dass wegen der erhöhten chemischen Reaktivität von Magnesium die heute auf dem Markt befindlichen Kühlerschutzmittel nur einen sehr eingeschränkten Korrosionsschutz für dieses Metall und dessen Legierungen bieten.

Es existieren bisher nur wenige Patentpublikationen, die Lösungen für diese Problematik anbieten.

Bereits 1931 wird im DRP 569 771 (1) eine Kühlflüssigkeit für aus Magnesiumlegierungen bestehende Teile von Brennkraftmaschinen, bestehend in einem mehrwertigen Alkohol mit einem Gehalt an geringen Mengen eines Alkalifluorids, gegebenenfalls in Anwesenheit von Wasser, beschrieben.

Im gleichen Jahr wird im DRP 579 185 (2) die Verwendung von Alkalisulfiden für den gleichen Einsatzzweck beschrieben.

Der Einsatz von Fluoriden oder Sulfiden ist jedoch heute wegen der toxikologischen Bedenklichkeit dieser Substanzklassen nicht mehr erwünscht.

WO 95/07323 (3) beschreibt wasserfreie Kühlerschutzmittel auf Basis von Monopropylenglykol, enthaltend Molybdat, Nitrat und ein Azolderivat wie Tolutriazol zum Korrosionsschutz verschiedener Metalle, darunter auch Magnesium und Magnesiumlegierungen. Wasserfreie Kühlerschutzmittel sind jedoch wegen ihrer schlechten Wärmeleitfähigkeit nicht praxisrelevant.

EP 229 440 B1 (4) beschreibt Kühlmittelkonzentrate, die auch Korrosionsschutz-Eigenschaften für Magnesium aufweisen sollen, enthaltend aliphatische Monocarbonsäuresalze, aliphatische Dicarbonsäuresalze und ein Kohlenwasserstofftriazol sowie gegebenenfalls zusätzlich ein Alkalimetallborat, -silikat, -benzoat, -nitrat, -nitrit, - molybdat und/oder ein Kohlenwasserstoffcarbazol. Konkrete Korrosionstestergebnisse werden für Magnesium nicht beschrieben.

EP 251, 480 B1 (5) beschreibt Kühlmittelkonzentrate, enthaltend Alkylbenzoesäuresalze, aliphatische Monocarbonsäuresalze und ein Triazol sowie gegebenenfalls weitere Komponenten, die nicht nur bei den bisher üblichen im Motorenbau verwendeten Metallen, sondern auch bei Magnesium zu einem verbesserten Korrosionsschutz führen sollen. Konkrete Korrosionstestergebnisse werden für Magnesium hier nicht aufgerührt.

Als Verbesserung gegenüber (5) beschreibt die WO 00/22189 (6) Kühlflüssigkeiten, die eine Kombination von Carbonsäuresalzen mit Fluorid und/oder Fluorcarbonsäuresalzen enthalten. Nachteilig ist jedoch hier insbesondere die Verwendung der toxikologisch bedenklichen Fluorwasserstoffsäure.

WO 99/19418 (7) beschreibt eine Kühlflüssigkeit auf Basis mehrwertiger Alkohole für Bauteile aus Magnesium, bestehend aus einer Kombination aus verzweigten aliphatischen Carbonsäuresalzen und Alkanolaminphosphaten sowie Tolutriazol/Benzotriazol, der gegebenenfalls weitere Additive wie aliphatische oder aromatische Mono- und/oder Dicarbonsäuresalze, Mercaptobenzthiazol oder Carboxymethylcellulose zugesetzt werden können. Die Korrosionstestergebnisse sind jedoch insbesondere in Gegenwart von größeren Mengen Wasser unzureichend.

WO 02/08354 (8) beschreibt Gefrierschutzmittelkonzentrate und diese umfassenden Kühlmittelzusammepsetzungen zum Schutz von Magnesium und Magnesiumlegierungen, enthaltend 0,05 bis 10 Gew.-% Carbonsäure- und/oder Sulfonsäureamide. Beschrieben werden Beispiele auf Basis von Monoethylenglykol mit 30% Wassergehalt, die sehr gute Korrosionstestergebnisse aufweisen.

Aufgabe der vorliegenden Erfindung war es daher, entsprechende Gefrierschutzmittelformulierungen bereitzustellen, welche die Nachteile des Standes der Technik nicht mehr aufweisen. Die herzustellenden Gefrierschutzmittel sollen insbesondere eine gute Wärmeleitfähigkeit aufweisen, nicht toxisch sein und einen guten Korrosionsschutz für Magnesium und Magnesiumlegierungen, aber auch für Aluminium und Aluminiumlegierungen gewährleisten.

Diese Aufgabe wird gelöst durch Gefrierschutzmittelkonzentrate auf Basis von Alkylenglykolen, Glycerin und/oder 1,3-Propandiol enthaltend
a) 0,05 bis 10 Gew.-%, bezogen auf die Gesamtmenge des Konzentrates eines oder mehrerer Polyethylen- und/oder Polypropylenglykole ausgewählt aus Triethylenglykol, Tetraethylenglykol, Pentaethylenglykol, Hexaethylenglykol, Tripropylenglykol, Tetrapropylenglykol, Pentapropylenglykol, Hexapropylenglykol und Mischungen davon,
b) 0,01 bis 10 Gew.-%, bezogen auf die Gesamtmenge des Konzentrates eines oder mehrerer Carbonsäureamide und/oder Sulfonsäureamide, wobei die Amidgruppe der Sulfonsäureamide unsubstituiert oder alkylsubstituiert ist,
c) 0,05 bis 10 Gew.-%, bezogen auf die Gesamtmenge des Konzentrates eines oder mehrerer aliphatischer, cycloaliphatischer oder aromatischer Amine mit 2 bis 15 C-Atomen, welche zusätzlich Ethersauerstoffatome oder Hydroxylgruppen enthalten können, und
d) 0,05 bis 10 Gew.-%, bezogen auf die Gesamtmenge des Konzentrates eines oder mehrerer ein- oder zweikerniger ungesättigter oder teilungesättigter Heterocyclen mit 4 bis 10 C-Atomen, welche benzanelliert sein und zusätzliche funktionelle Gruppen tragen können.

Überraschenderweise wurde gefunden, dass durch Zugabe geringer Mengen Polyethylenglykole zu den Mischungen gemäß (8) gut wirksame Kühlmittel-formulierungen für Magnesium und Magnesiumlegierungen erhalten werden.

In einer bevorzugten Ausführungsform wird die Komponente a) ausgewählt aus Triethylenglykol, Tetraethylenglykol, Tripropylenglykol, Tetrapropylenglykol und Mischungen davon, insbesondere Tripropylenglykol.

Unter dem Begriff "Propylenglykol" wird im Rahmen der vorliegenden Erfindung 1,2-Propandiol verstanden.

Vorzugsweise ist die Komponente b) ausgewählt aus Amiden von linearen und verzweigten aliphatischen, cycloaliphatischen, aromatischen und heteroaromatischen Carbonsäuren und/oder Sulfonsäuren mit jeweils 2 bis 16 C-Atomen, vorzugsweise mit jeweils 3 bis 12 C-Atomen.

Die Amide und Sulfonsäureamide der Komponente b) können gegebenenfalls am Stickstoffatom der Amidgruppe alkylsubstituiert sein, beispielsweise durch eine C₁-C₄-Alkylgruppe. Aromatische oder heteroaromatische Grundgerüste des Moleküls können selbstverständlich auch Alkylgruppen tragen. Im Molekül können eine oder mehrere, vorzugsweise eine oder zwei Amidgruppen vorliegen. Die Amide können zusätzliche funktionelle Gruppen, vorzugsweise C₁-C₄-Alkoxy, Amino, Chlor, Fluor, Hydroxy und/oder Acetyl, tragen, insbesondere finden sich solche funktionelle Gruppen als Substituenten an vorhandenen aromatischen oder heteroaromatischen Ringen.

Typische Beispiele für derartige Carbonsäure- und Sulfonsäureamide sind nachfolgend aufgeführt.
- aromatische Carbonsäureamide:
   Benzamid
   2-Methylbenzamid
   3-Methylbenzamid
   4-Methylbenzamid
   2,4-Dimethylbenzamid
   4-tert.-Butylbenzamid
   3-Methoxybenzamid
   4-Methoxybenzamid
   2-Aminobenzamid (Anthranilsäureamid)
   3-Aminobenzamid
   4-Aminobenzamid
   3-Amino-4-methylbenzamid
   2-Chlorbenzamid
   3-Chlorbenzamid
   4-Chlorbenzamid
   2-Fluorbenzamid
   3-Fluorbenzamid
   4-Fluorbenzamid
   2,6-Difluorbenzamid
   4-Hydroxybenzamid
   Phthalsäurediamid
   Terephthalsäurediamid
- heteroaromatische Carbonsäureamide:
   Nicotinsäureamid (Pyridin-3-carbonsäureamid)
   Picolinsäureamid (Pyridin-2-carbonsäureamid)
- aliphatische Carbonsäureamide:
   Bernsteinsäurediamid
   Adipinsäurediamid
   Propionsäureamid
   Hexansäureamid
- cycloaliphatische Carbonsäureamide mit der Amidgruppierung als Bestandteil des Ringes:
   2-Pyrrolidon
   N-Methyl-2-pyrrolidon
   2-Piperidon
   ε-Caprolactam
- aliphatische Sulfonsäureamide:
   Methansulfonsäureamid
   Hexan-1-sulfonsäureamid
- aromatische Sulfonsäureamide:
   Benzolsulfonsäureamid
   o-Toluolsulfonsäureamid
   m-Toluolsulfonsäureamid
   p-Toluolsulfonsäureamid
   4-tert.-Butylbenzolsulfonsäureamid
   4-Fluorbenzolsulfonsäureamid
   4-Hydroxybenzolsulfonsäureamid
   2-Aminobenzolsulfonsäureamid
   3-Aminobenzolsulfonsäureamid
   4-Aminobenzolsulfonsäureamid
   4-Acetylbenzolsulfonsäureamid

In einer weiteren bevorzugten Ausführungsform enthalten die erfindungsgemäßen Gefrierschutzmittelkonzentrate zusätzlich ein oder mehrere der nachfolgend aufgeführten nichtionischen Verbindungen:
e) 0 bis 10 Gew.%, vorzugsweise 0,05 bis 5 Gew.-% eines oder mehrerer Tetra-(C₁-C₈-alkoxy)-silane (Orthokieselsäure-tetra-C₁-C₈-alkylester), bezogen auf die Gesamtmenge des Konzentrats

Beispiele für aliphatische, cycloaliphatische oder aromatische Amine c) mit 2 bis 15, vorzugsweise 4 bis 8 C-Atomen, welche zusätzlich Ethersauerstoffatome oder Hydroxylgruppen enthalten können, umfassen Ethylamin, Propylamin, Isopropylamin, n-Butylamin, Isobutylamin, sec.-Butylamin, tert.-Butylamin, n-Pentylamin, n-Hexylamin, n-Heptylamin, n-Octylamin, Isononylamin, Di-n-propylamin, Diisopropylamin, Di-n-butylamin, Hexamethylentetramin (Urotropin), Mono-, Di- und Triethanolamin, Piperidin, Morpholin, Anilin oder Benzylamin. Die organischen Gruppen der aliphatischen und cycloaliphatischen Amine der Gruppe c) sind vorzugsweise gesättigt.

Beispiele für Heterocyclen d) umfassen einkernige fünf- oder sechsgliedrige Systeme mit 1, 2 oder 3 Stickstoffatomen oder mit einem Stickstoffatom und einem Schwefelatom, welche benzanelliert sein können. Es können auch zweikernige Systeme aus fünf- und/oder sechsgliedrigen Teilringen mit typischerweise 2, 3, oder 4 Stickstoffatomen eingesetzt werden. Die Heterocyclen der Gruppe d) können zusätzlich funktionelle Gruppen, vorzugsweise C₁-C₄-Alkoxy, Amino und/oder Mercapto, tragen. Das heterocyclische Grundgerüst kann selbstverständlich auch Alkylgruppen tragen.

Beispiele für Heterocyclen d) umfassen Benztriazol, Tolutriazol, hydriertes Tolutriazol, 1H-1,2,4-Triazol, Benzimidazol, Benzthiazol, Mercaptobenzthiazol, Adenin, Purin, 6-Methoxypurin, Indol, Isoindol, Isoindolin, Pyridin, Pyrimidin, 3,4-Diaminopyridin, 2-Aminopyrimidin und 2-Mercaptopyrimidin.

Beispiele für Tetra-(C₁-C₈-alkoxy)-silane e) umfassen Tetramethoxysilan, Tetraethoxysilan, Tetra-n-propoxysilan und Tetra-n-butoxysilan.

Weiterhin können die erfindungsgemäßen Gefrierschutzmittelkonzentrate zusätzlich eine oder mehrere der nachfolgend aufgeführten Verbindungen enthalten:
f) 0 bis 10 Gew.-%, vorzugsweise 0,05 bis 5 Gew.-%, bezogen auf die Gesamtmenge des Konzentrates, ein oder mehrere aliphatische oder aromatische Monocarbonsäuren mit jeweils 3 bis 16 C-Atomen in Form deren Alkalimetall-, Ammonium- oder substituierten Ammoniumsalze und/oder
g) 0 bis 10 Gew.-%, vorzugsweise 0,05 bis 5 Gew.-%, bezogen auf die Gesamtmenge des Konzentrates, ein oder mehrere aliphatische oder aromatische Dicarbonsäuren mit jeweils 4 bis 20 C-Atomen in Form deren Alkalimetall-, Ammonium- oder substituierten Ammoniumsalze und/oder
h) ein oder mehrere Alkalimetallborate, Alkalimetallphosphate, Alkali-metallsilikate, Alkalimetallnitrite, Alkali- oder Erdalkalimetallnitrate, Molybdate oder Alkali- oder Erdalkalimetallfluoride in Mengen von jeweils 0 bis zu 1 Gew.-%, bezogen auf die Gesamtmenge des Konzentrates und/oder
i) 0 bis 1 Gew.-%, bezogen auf die Gesamtmenge des Konzentrates, ein oder mehrere Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

Bei den Verbindungen der Gruppen f), g) und h) handelt es sich um zusätzliche Korrosionsinhibitoren.

Beispiele für lineare, verzweigtkettige oder cyclische aliphatische Monocarbonsäuren der Gruppe f) umfassen Propionsäure, Pentansäure, Hexansäure, Cyclohexylessigsäure, Octansäure, 2-Ethylhexansäure, Nonansäure, Isononansäure, Decansäure, Undecansäure und Dodecansäure.

Beispiele für aromatische Monocarbonsäuren der Gruppe f) umfassen insbesondere Benzoesäure, weiterhin C₁-bis C₈-Alkylbenzoesäuren, beispielsweise o-, m-, p-Methylbenzoesäure oder p-tert.-Butylbenzoesäure, C₁-bis C₄-Alkoxybenzoesäuren, beispielsweise o-, m-, p-Methoxybenzoesäure, hydroxylgruppenhaltige aromatische Monocarbonsäuren, beispielsweise o-, m- oder p-Hydroxybenzoesäure, o-, m- und p-(Hydroxymethyl)benzoesäure, oder Halogenbenzoesäuren, beispielsweise o-, m- oder p-Fluorbenzoesäure.

Beispiele für Dicarbonsäuren der Gruppe g) umfassen Malonsäure, Bernsteinsäure, Glutarsäure, Adipinsäure, Pimelinsäure, Korksäure, Azelainsäure, Sebacinsäure, Undecandisäure, Dodecandisäure, Dicyclopentadiendicarbonsäure, Phthalsäure und Terephthalsäure.

Alle genannten Carbonsäuren liegen als Alkalimetallsalze, vor allem als Natrium- oder Kaliumsalze, oder als Ammoniumsalze oder substituierte Ammoniumsalze (Aminsalze) vor, z. B. mit Ammoniak, Trialkylaminen oder Trialkanolaminen.

Beispiele für unter h) genannte zusätzliche Korrosionsinhibitoren umfassen Natriumtetraborat (Borax), Dinatriumhydrogenphosphat, Trinatriumphosphat, Natriummetasilikat, Natriumnitrit, Natriumnitrat, Magnesiumnitrat, Natriumfluorid, Kaliumfluorid, Magnesiumfluorid und Natriummolybdat.

Bei Mitverwendung von Alkalimetallsilikaten werden die vorstehend genannten Inhibitoren zweckmäßigerweise durch übliche Organosilicophosphonate oder Organo-silicosulfonate in üblichen Mengen stabilisiert.

Zusätzlich zu den genannten Inhibitorkomponenten können beispielsweise auch noch lösliche Salze des Magnesiums von organischen Säuren, z. B. Magnesiumbenzolsulfonat, Magnesiummethansulfonat, Magnesiumacetat oder Magnesiumpropionat, Hydrocarbazole oder quaternierte Imidazole, wie sie in der DE-A 196 05 509 beschrieben sind, in üblichen Mengen als weitere Inhibitoren eingesetzt werden.

Der pH-Wert der erfindungsgemäßen Gefrierschutzmittelkonzentrate liegt üblicherweise im Bereich von 4 bis 11, vorzugsweise 4 bis 10, insbesondere 4,5 bis 8,5. Dabei kann der gewünschte pH-Wert gegebenenfalls auch durch Zugabe von Alkalimetallhydroxid, Ammoniak oder Aminen zur Formulierung eingestellt werden, festes Natrium- oder Kaliumhydroxid sowie wässrige Natron- oder Kalilauge sind hierfür besonders geeignet. Mitzuverwendende Carbonsäuren werden zweckmäßigerweise gleich als entsprechende Alkalimetallsalze zugegeben, um automatisch im gewünschten pH-Bereich zu liegen; man kann die Carbonsäuren jedoch auch als freie Säuren zufügen und dann mit Alkalimetallhydroxid, Ammoniak oder Aminen neutralisieren und den gewünschten pH-Bereich einstellen.

Den Hauptbestandteil des erfindungsgemäßen Gefrierschutzmittelkonzentrats bildet mindestens ein Alkylenglykol, Glycerin, 1,3-Propandiol oder Mischungen davon. Diese Komponente(n) ist vorzugsweise zu ≥ 75 Gew.-%, insbesondere ≥ 85 Gew.-% vorhanden. Das Alkylenglykol ist vorzugsweise Ethylenglykol und/oder Propylenglykol.

In einer bevorzugten Ausführungsform basiert dieser Hauptbestandteil auf Ethylenglykol, Propylenglykol oder Mischungen davon. Ethylenglykol und/oder Propylenglykol sind dabei zu mindestens 95 Gew.-% vorhanden, weiterhin sind gegebenenfalls Glycerin oder 1,3-Propandiol vorhanden. Insbesondere ist der Hauptbestandteil Ethylenglykol, Propylenglykol oder eine Mischung davon.

Als weitere übliche Hilfsmittel können die erfindungsgemäßen Gefrierschutzmittelkonzentrate in üblichen geringen Mengen noch Entschäumer (in der Regel in Mengen von 0,003 bis 0,008 Gew.-%), Farbstoffe sowie Bitterstoffe aus Gründen der Hygiene und der Sicherheit im Falle eines Verschluckens (z.B. vom Typ Denatoniumbenzoat) enthalten.

Gegenstand der vorliegenden Erfindung sind auch gebrauchsfertige wässrige Kühlmittelzusammensetzungen mit einem erniedrigten Gefrierpunkt, insbesondere für den Kühlerschutz im Automobilbereich, die 70 bis 30 Gew.-%, vorzugsweise 60 bis 40 Gew.-% Wasser und 30 bis 70 Gew.-%, insbesondere 40 bis 60 Gew.-% der erfindungsgemäßen Gefrierschutzmittelkonzentrate enthalten. Die gebrauchsfertigen Kühlmittelzusammensetzungen werden durch Verdünnen der erfindungsgemäßen Gefrierschutzmittelkonzentrate mit Wasser erhalten.

Die erfindungsgemäßen Gefrierschutzmittelkonzentrate zeichnen sich vor allem durch eine effektivere Korrosionsinhibierung bei Magnesium und Magnesiumlegierungen gegenüber den Mitteln des Standes der Technik aus.

Somit ist ein weiterer Gegenstand der vorliegenden Erfindung die Verwendung einer entsprechenden wässrigen Kühlmittelzusammensetzung zur Verhinderung der Korrosion von Magnesium oder Magnesiumlegierungen in Verbrennungsmotoren. Dabei werden diejenigen Teile geschützt, die über den Kühlkreislauf in Kontakt mit den Kühlmittelzusammensetzungen stehen.

Die nachfolgenden Beispiele sollen die Erfindung erläutern, ohne sie jedoch zu beschränken.

### Beispiele

Aus einem erfindungsgemäßen Gefrierschutzmittelkonzentrat wurde die in der Tabelle 1 aufgeführte-Kühlnüttelzusammensetzung Beispiel 1 und ein Vergleichsbeispiel aus einem Konzentrat nach WO 02/08354 jeweils mit 50 % Wassergehalt hergestellt, wobei sich die Gefrierschutzmittelkonzentrate zum Beispiel einfach dadurch erhalten lassen, dass man die Komponenten in Monoethylenglykol löst. Durch einfaches Verdünnen mit Wasser sind daraus die wässrigen Kühlmittelzusammensetzungen zugänglich.

Die Prüfung dieser wässrigen Kühlmittelzusammensetzungen erfolgte direkt ohne weitere Verdünnung im Statischen Heißflächentest ASTM D 4340-98 unter Verwendung eines Magnesium-Probenkörpers der Legierung AZ91 HP bzw. an einem Gussaluminium-Probenkörper der Legierung GAlSi6Cu4. Anstelle von konzentrierter Salpetersäure wurde zur Reinigung des Magnesium-Probenkörpers nach dem Test die für dieses Metall besser geeignete Chromsäure verwendet.

Die Ergebnisse sind der Tabelle 2 zu entnehmen. Sie zeigen, dass mit den erfindungsgemäßen Kühlmittelzusammensetzungen ein deutlich besserer Korrosionsschutz bei Magnesium erzielt wird als mit dem Vergleichsbeispiel nach WO 02/08354 als Stand der Technik.

Auch wird gleichzeitig ein guter Korrosionsschutz bei Aluminium erreicht. Die leichte Gewichtszunahme bei Gussaluminium beim erfindungsgemäßen Beispiel 1 weist hier auf die Ausbildung einer stabilen Schutzschicht hin.

**Tabelle 1: Geprüfte Kühlmittelzusammensetzungen**

| **Komponenten [Gew.-%]** | **Beispiel 1** | **Vergleichsbeispiel nach** WO 02/08354 |
|---|---|---|
| **Mischung aus p-Toluolsulfonamid, Triethanolamin und 1H-1,2,4-Triazol** | 2,5 | 2,5 |
| **Tripropylenglykol** | 3 | --- |
| **destilliertes Wasser** | 50 | 50 |
| **Monoethylenglykol** | Rest | Rest |

**Tabelle 2: Statischer Heißkorrosionstest gemäß ASTM D 4340-98**

| **Korrosionsrate [mg/cm²/Woche]** | **Beispiel 1** | **Vergleichsbeispiel nach** WO 02/08354 |
|---|---|---|
| **Mg AZ91 HP** | - 3,43 | - 13,40 |
| **GAlSi6Cu4** | + 0,25 | --- |

## Patentansprüche

1. Gefrierschutzmittelkonzentrat auf Basis von Alkylenglykol, Glycerin und/oder 1,3-Propandiol, enthaltend
a) 0,05 bis 10 Gew.-%, bezogen auf die Gesamtmenge des Konzentrates eines oder mehrerer Polyethylen- und/oder Polypropylenglykole ausgewählt aus Triethylenglykol, Tetraethylenglykol, Pentaethylenglykol, Hexaethylenglykol, Tripropylenglykol, Tetrapropylenglykol, Pentapropylenglykol, Hexapropylenglykol und Mischungen davon,
b) 0,01 bis 10 Gew.-%, bezogen auf die Gesamtmenge des Konzentrates eines oder mehrerer Carbonsäureamide und/oder Sulfonsäureamide, wobei die Amidgruppe der Sulfonsäureamide unsubstituiert oder alkylsubstituiert ist,
c) 0,05 bis 10 Gew.-%, bezogen auf die Gesamtmenge des Konzentrates eines oder mehrerer aliphatischer, cycloaliphatischer oder aromatischer Amine mit 2 bis 15 C-Atomen, welche zusätzlich Ethersauerstoffatome oder Hydroxylgruppen enthalten können, und
d) 0,05 bis 10 Gew.-%, bezogen auf die Gesamtmenge des Konzentrates eines oder mehrerer ein- oder zweikerniger ungesättigter oder teilungesättigter Heterocyclen mit 4 bis 10 C-Atomen, welche benzanelliert sein und zusätzliche funktionelle Gruppen tragen können.

2. Konzentrat nach Anspruch 1, **dadurch gekennzeichnet, dass** die Komponente a) ausgewählt ist aus Triethylenglykol, Tetraethylenglykol, Tripropylenglykol, Tetrapropylenglykol und Mischungen davon.

3. Konzentrat nach Anspruch 1 oder 2, **dadurch gekennzeichnet, dass** die Komponente b) ausgewählt ist aus Amiden von linearen und verzweigten aliphatischen, cycloaliphatischen, aromatischen und heteroaromatischen Carbonsäuren und/oder Sulfonsäuren mit jeweils 2 bis 16 C-Atomen.

4. Konzentrat nach Anspruch 3, **dadurch gekennzeichnet, dass** die Komponente b) ausgewählt ist aus aromatischen Carbonsäureamiden, heteroaromatischen Carbonsäureamiden, aliphatischen Carbonsäureamiden, cycloaliphatischen Carbonsäureamiden mit der Amidgruppierung als Bestandteil des Ringes, aliphatischen Sulfonsäureamiden und aromatischen Sulfonsäureamiden.

5. Konzentrat nach einem der Ansprüche 1 bis 4, **dadurch gekennzeichnet, dass** das Konzentrat zusätzlich folgende Verbindung enthält:
e) 0 bis 10 Gew.% eines oder mehrerer Tetra-(C₁-C₈-alkoxy)-silane (Orthokieselsäure-tetra-C₁-C₈-alkylester), bezogen auf die Gesamtmenge des Konzentrates.

6. Konzentrat nach einem der Ansprüche 1 bis 5, **dadurch gekennzeichnet, dass** dieses zusätzlich mindestens eine der nachfolgend aufgeführten Verbindungen enthält:
f) 0 bis 10 Gew.-%, bezogen auf die Gesamtmenge des Konzentrates ein oder mehrere aliphatische oder aromatische Monocarbonsäuren mit jeweils 3 bis 16 C-Atomen in Form von deren Alkalimetall-, Ammonium- oder substituierten Ammoniumsalze,
g) 0 bis 10 Gew.-%, bezogen auf die Gesamtmenge des Konzentrates ein oder mehrere aliphatische oder aromatische Dicarbonsäuren mit jeweils 4 bis 20 C-Atomen in Form von deren Alkalimetall-, Ammonium- oder substituierten Ammoniumsalze,
h) ein oder mehrere Alkalimetallborate, Alkalimetallphosphate, Alkalimetallsilikate, Alkalimetallnitrite, Alkali- oder Erdalkalimetallnitrate, Molybdate oder Alkali- oder Erdalkalimetallfluoride in Mengen von jeweils 0 bis zu 1 Gew.-%, bezogen auf die Gesamtmenge des Konzentrates,
i) 0 bis 1 Gew.-%, bezogen auf die Gesamtmenge des Konzentrates ein oder mehrere Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

7. Konzentrat nach einem der Ansprüche 1 bis 6, **dadurch gekennzeichnet, dass** dieses zusätzlich lösliche Salze des Magnesiums und organischen Säuren, Hydrocarbazole und/oder quaternierte Imidazole enthält.

8. Konzentrat nach einem der Ansprüche 1 bis 7, **dadurch gekennzeichnet, dass** Alkylenglykol, Glycerin, 1,3-Propandiol oder Mischungen davon in Mengen ≥ 75 Gew.-% vorhanden sind.

9. Konzentrat nach Anspruch 8, **dadurch gekennzeichnet, dass** als Alkylenglykol Ethylenglykol, Propylenglykol oder Mischungen davon eingesetzt werden.

10. Konzentrat nach einem der Ansprüche 1 bis 9, **dadurch gekennzeichnet, dass** dessen pH-Wert im Bereich von 4 bis 11 liegt.

11. Wässrige Kühlmittelzusammensetzung enthaltend Wasser und 30 bis 70 Gew.-% des Konzentrats nach einem der Ansprüche 1 bis 10.

12. Verwendung einer wässrigen Kühlmittelzusammensetzung nach Anspruch 11 zur Verhinderung der Korrosion von Magnesium oder Magnesiumlegierungen in Verbrennungsmotoren.

## Claims

1. An antifreeze concentrate based on alkylene glycol, glycerol and/or 1,3-propanediol, comprising
a) from 0.05 to 10% by weight, based on the total amount of the concentrate, of one or more polyethylene glycols and/or polypropylene glycols, selected from triethylene glycol, tetraethylene glycol, pentaethylene glycol, hexaethylene glycol, tripropylene glycol, tetrapropylene glycol, pentapropylene glycol, hexapropylene glycol and mixtures thereof,
b) from 0.01 to 10% by weight, based on the total amount of the concentrate, of one or more carboxamides and/or sulfonamides, where the amide group of the sulfonamides is unsubstituted or alkyl-substituted.
c) from 0.05 to 10% by weight, based on the total amount of the concentrate, of one or more aliphatic, cycloaliphatic or aromatic amines of 2 to 15 carbon atoms, which may additionally comprise etheroxygen atoms or hydroxyl groups, and
d) from 0.05 to 10% by weight, based on the total amount of the concentrate, of one or more mononuclear or dinuclear unsaturated or partly unsaturated heterocycles of 4 to 10 carbon atoms, which may be benzofused and may carry additional functional groups.

2. The concentrate according to claim 1, wherein the component a) is selected from triethylene glycol, tetraethylene glycol, tripropylene glycol, tetrapropylene glycol and mixtures thereof.

3. The concentrate according to claim 1 or 2, wherein the component b) is selected from amides of linear and branched aliphatic, cycloaliphatic, aromatic and heteroaromatic carboxylic acids and/or sulfonic acids, each of 2 to 16 carbon atoms.

4. The concentrate according to claim 3, wherein the component b) is selected from aromatic carboxamides, heteroaromatic carboxamides, aliphatic carboxamides, cycloaliphatic carboxamides having the amido group as part of the ring, aliphatic sulfonamides and aromatic sulfonamides.

5. The concentrate according to any of claims 1 to 4, which additionally comprises the following compound:
e) from 0 to 10% by weight, based on the total amount of the concentrate, of one or more tetra (C₁-C₈-alkoxy) silanes (tetra-C₁-C₈-alkyl orthosilicates).

6. The concentrate according to any of claims 1 to 5, which additionally comprises at least one of the compounds stated below:
f) from 0 to 10% by weight, based on the total amount of concentrate, of one or more aliphatic or aromatic monocarboxylic acids, each of 3 to 16 carbon atoms, in the form of the alkali metal, ammonium or substituted ammonium salts thereof,
g) from 0 to 10% by weight, based on the total amount of the concentrate, of one or more aliphatic or aromatic dicarboxylic acids, each of 4 to 20 carbon atoms, in the form of the alkali metal, ammonium or substituted ammonium salts thereof,
h) one or more alkali metal borates, alkali metal phosphates, alkali metal silicates, alkali metal nitrites, alkali metal or alkaline earth metal nitrates, molybdates or alkali metal or alkaline earth metal fluorides, each in amounts of from 0 to 1% by weight, based on the total amount of the concentrate,
i) from 0 to 1% by weight, based on the total amount of the concentrate, of one or more hard water stabilizers based on polyacrylic acid, polymaleic acid, acrylic acid/maleic acid copolymers, polyvinylpyrrolidone, polyvinylimidazole, vinylpyrrolidone/vinylimidazole copolymers and/or copolymers of unsaturated carboxylic acids and olefins.

7. The concentrate according to any of claims 1 to 6, which additionally comprises soluble salts of magnesium and organic acids, hydrocarbazoles and/or quaternized imidazoles.

8. The concentrate according to any of claims 1 to 7, wherein alkylene glycol, glycerol, 1,3-propanediol or mixtures thereof in amounts of ≥ 75% by weight are present.

9. The concentrate according to claim 8, wherein ethylene glycol, propylene glycol or a mixture thereof is used as the alkylene glycol.

10. The concentrate according to any of claims 1 to 9, whose pH is from 4 to 11.

11. An aqueous coolant composition comprising water and from 30 to 70% by weight of a concentrate according to any of claims 1 to 10.

12. The use an aqueous coolant composition according to claim 11 for preventing the corrosion of magnesium or magnesium alloys in internal combustion engines.

## Revendications

1. Concentré d'antigel à base d'alkylèneglycol, de glycérol et/ou de 1,3-propanediol, contenant
a) 0,05 à 10 % en poids, par rapport à la quantité totale du concentré, d'un ou plusieurs polyéthylène- et/ou polypropylène-glycols choisis parmi le triéthylèneglycol, le tétraéthylèneglycol, le pentaéthylène-glycol, l'hexaéthylèneglycol, le tripropylèneglycol, le tétrapropylèneglycol, le pentapropylèneglycol, l'hexapropylèneglycol et des mélanges de ceux-ci,
b) 0,01 à 10 % en poids, par rapport à la quantité totale du concentré, d'un ou plusieurs carboxamides et/ou sulfonamides, le groupe amido des sulfonamides étant non substitué ou substitué par alkyle,
c) 0,05 à 10 % en poids, par rapport à la quantité totale du concentré, d'une ou plusieurs amines aliphatiques, cycloaliphatiques ou aromatiques ayant de 2 à 15 atomes de carbone, qui peuvent contenir en outre des atomes d'oxygène en fonction éther ou des groupes hydroxy, et
d) 0,05 à 10 % en poids, par rapport à la quantité totale du concentré, d'un ou plusieurs hétérocycles mono- ou bicycliques, insaturés ou partiellement saturés, ayant de 4 à 10 atomes de carbone, qui peuvent être soudés à un noyau benzénique et porter des groupes fonctionnels supplémentaires.

2. Concentré selon la revendication 1, **caractérisé en ce que** le composant a) est choisi parmi le triéthylèneglycol, le tétraéthylèneglycol, le tripropylèneglycol, le tétrapropylèneglycol et des mélanges de ceux-ci.

3. Concentré selon la revendication 1 ou 2, **caractérisé en ce que** le composant b) est choisi parmi des amides d'acides carboxyliques et/ou d'acides sulfoniques, aliphatiques linéaires et ramifiés, cycloaliphatiques, aromatiques et hétéroaromatiques, ayant chacun de 2 à 16 atomes de carbone.

4. Concentré selon la revendication 3, **caractérisé en ce que** le composant b) est choisi parmi des carboxamides aromatiques, des carboxamides hétéroaromatiques, des carboxamides aliphatiques, des carboxamides cycloaliphatiques comportant le groupement amido en tant que constituant du cycle, des sulfonamides aliphatiques et des sulfonamides aromatiques.

5. Concentré selon l'une quelconque des revendications 1 à 4, **caractérisé en ce que** le concentré contient en outre le composé suivait :
e) 0 à 10 % en poids d'un ou plusieurs tétra[alcoxy(C₁-C₈)]-silanes [orthosilicates de tétraalkyle(C₁-C₈)], par rapport à la quantité totale du concentré.

6. Concentré selon l'une quelconque des revendications 1 à 5, **caractérisé en ce qu'**en outre il contient au moins l'un des composés indiqués ci-après :
f) 0 à 10 % en poids, par rapport à la quantité totale du concentré, d'un ou plusieurs acides monocarboxyliques aliphatiques ou aromatiques ayant chacun de 3 à 16 atomes de carbone, sous forme de leurs sels de métaux alcalins, d'ammonium ou d'ammonium substitué,
g) 0 à 10 % en poids, par rapport à la quantité totale du concentré, d'un ou plusieurs acides dicarboxyliques aliphatiques ou aromatiques ayant chacun de 4 à 20 atomes de carbone, sous forme de leurs sels de métaux alcalins, d'ammonium ou d'ammonium substitué,
h) un ou plusieurs borates de métaux alcalins, phosphates de métaux alcalins, silicates de métaux alcalins, nitrites de métaux alcalins, nitrates de métaux alcalins ou alcalino-terreux, molybdates ou fluorures de métaux alcalins ou alcalino-terreux, en quantités allant, respectivement, de 0 à 1 % en poids, par rapport à la quantité totale du concentré,
i) 0 à 1 % en poids, par rapport à la quantité totale du concentré, d'un ou plusieurs stabilisants d'eau dure, à base de poly(acide acrylique), poly(acide maléique), copolymères acide acrylique/acide maléique, polyvinylpyrrolidone, polyvinylimidazole, copolymères vinylpyrrolidone/vinylimidazole et/ou copolymères d'acides carboxyliques insaturés et d'oléfines.

7. Concentré selon l'une quelconque des revendications 1 à 6, **caractérisé en ce qu'**il contient en outre des sels solubles du magnésium et des acides organiques, des hydrocarbazoles et/ou des imidazoles rendus quaternaires.

8. Concentré selon l'une quelconque des revendications 1 à 7, **caractérisé en ce qu'**un alkylèneglycol, du glycérol, du 1,3-propanediol ou des mélanges de ceux-ci sont présents en quantités ≥ 75 % en poids.

9. Concentré selon la revendication 8, **caractérisé en ce qu'**on utilise en tant qu'alkylèneglycol l'éthylèneglycol, le propylèneglycol ou des mélanges de ceux-ci.

10. Concentré selon l'une quelconque des revendications 1 à 9, **caractérisé en ce que** son pH se situe dans l'intervalle allant de 4 à 11.

11. Composition aqueuse de réfrigérant contenant de l'eau et de 30 à 70 % en poids du concentré selon l'une quelconque des revendications 1 à 10.

12. Utilisation d'une composition aqueuse de réfrigérant selon la revendication 11, pour réduire la corrosion du magnésium ou d'alliages de magnésium dans des moteurs à combustion.
